(19) Europäisches Patentamt / European Patent Office / Office européen des brevets

(11) **EP 3 007 302 A1**

(12) **EUROPEAN PATENT APPLICATION**

(43) Date of publication:
13.04.2016 Bulletin 2016/15

(51) Int Cl.:
*H02J 3/38* (2006.01)   *H02J 7/34* (2006.01)
*H02J 3/32* (2006.01)

(21) Application number: **14188448.6**

(22) Date of filing: **10.10.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **ABB Technology AG**
**8050 Zürich (CH)**

(72) Inventors:
• **Oudalov, Alexandre**
  **5442 Fislisbach (CH)**

• **Poland, Jan**
  **5415 Nussbaumen (CH)**
• **Ferreau, Joachim**
  **5436 Würenlos (CH)**
• **Johansson, Nicklas**
  **72246 Västeras (SE)**
• **Tengner, Tomas**
  **72241 Västeras (SE)**

(74) Representative: **ABB Patent Attorneys**
**C/o ABB Schweiz AG**
**Intellectual Property (CH-LC/IP)**
**Brown Boveri Strasse 6**
**5400 Baden (CH)**

(54) **State of charge management in battery systems**

(57) The present invention is concerned with strategies to manage the State of Charge (SoC) of a battery which is used to limit ramp rates of a renewable power plant. The proposed management system relies on a SoC target that is defined by the energy to be absorbed or provided, either in a worst case or most likely (statistical, forecast) scenario. It facilitates smaller dimensioning of the Battery Energy Storage System (BESS), while still guaranteeing the required level of availability. The SoC management likewise reduces the energy throughput, and thus both improves system efficiencies through reduced losses and extends the lifetime of the battery through reduced cycle degradation. Both aspects contribute to lowering costs of the BESS. Integration of relevant environmental conditions and / or available short term predictions further improves the resulting economies. The SoC management system is conceptually simple and can easily be implemented even on a cheap controller hardware with little computational power.

Fig. 2

**Description**

FIELD OF THE INVENTION

The invention relates to the field of Battery Energy Storage Systems, specifically to strategies to manage the state of charge of a battery which is used to limit ramp rates of a renewable power plant.

BACKGROUND OF THE INVENTION

Battery Energy Storage Systems (BESS) are becoming more and more important in electrical power systems. A main driver is the increasing integration of intermittent renewable energy sources such as solar and wind power. As these renewable sources largely fluctuate in time some kind of "smoothing" of the power output at the producer side is necessary. One particular aspect thereof is ramp rate limitation, i.e. the implementation of mechanisms that guarantee that the rate of change of power output by a renewable power plant does not exceed a specified limit at any time. Ramp rate limitation is in particular important for photovoltaic and solar thermal power plants where passing clouds may otherwise introduce significant ramp rates, as well as for wind power plants.

Having the ability to supply or absorb large amounts of power in milliseconds, batteries are in fact very suitable for ramp rate control or limitation, as well as for frequency regulation, load balancing or peak shaving. However, since energy capacity is still an important cost factor, it is crucial to correctly dimension the battery size to the application and to operate it in the least stressful way possible. At present, a very important class of batteries considered for small to mid-size applications is lithium ion (Li-Ion) batteries. The degradation of Li-Ion batteries is subject to substantial on-going research and still not fully understood, but it is known that degradation is taking place with the load cycles of the battery on the one hand ("cycle degradation") and with time elapsing on the other hand ("calendar aging"). Both cycle degradation and calendar aging significantly depend on a plurality of factors including battery temperature, voltage, rate of charge/discharge, Depth of Discharge (DoD), as well as a State of Charge (SoC) indicative of the accumulated energy stored in the battery. Cycle degradation in addition depends on the charge/discharge currents or energy throughput. Accordingly, battery operation also aims at minimizing the cycle degradation of the battery through minimization of the energy throughput.

The patent US 8471520 B2 discloses a method of managing a cumulative power transfer from a power storage device and a renewable power source including a plurality of wind turbine generators to a load. The method determines whether a change in a power generation rate from the wind turbine generators exceeds a ramp rate limit, and adjusts a power transfer rate to or from the power storage device to prevent the cumulative power transfer rate from exceeding a limit. A present state-of-charge of the power storage device is determined, and the ramp rate limit is set to a minimum value if the present state-of-charge is less than a minimum state-of-charge.

The patent application EP 14150332.6 discloses operation of photovoltaic plants based on short-term forecasting of solar irradiance on the absorbing elements of the plant. It involves recursive updating of estimated parameters pertaining to pre-defined and physically motivated cloud evolution models that are instantiated and assigned to clouds identified in images taken by a ground-based visible-light camera.

DESCRIPTION OF THE INVENTION

It is an objective of the invention to reduce a size and extend a lifetime of a battery in a Battery Energy Storage System for ramp rate limitation in intermittent renewable power systems. This objective is achieved by a method and a controller according to the independent claims. Preferred embodiments are evident from the dependent patent claims.

According to the invention, a battery power $P_{BESS}$ absorbed or provided by a Battery Energy Storage System (BESS) for ramp-rate limitation of a renewable power source is controlled such that a ramp rate of a total output power $P_{OUT}$ of the renewable power source and the BESS does not exceed a limit. To this end a present, or actual, State of Charge SoC of the BESS and a present total output power $P_{OUT}$ of the renewable power source and the BESS are determined. The present SoC is compared to a predefined SoC target depending on $P_{OUT}$ in a non-constant manner, and $P_{BESS}$ is controlled, or adjusted, based on the comparison, specifically in view of approaching the present SoC towards the SoC target.

In a preferred variant of the invention the SoC target is defined as a SoC target range comprised between a lower bound function $SoC_{LO}$ and an upper bound function $SoC_{UP}$ depending on $P_{OUT}$. A set of admissible or acceptable operating states is thus defined instead of a single SoC target value, which leads to a reduced involvement of the battery and lower energy throughput.

In a further preferred variant of the invention the lower bound function $SoC_{LO}$ is defined as a lowest SoC of the BESS permitting to ramp, or reduce, the output power $P_{OUT}$ to zero without exceeding a ramp rate limit, while the upper bound function $SoC_{UP}$ is defined as the uppermost SoC of the BESS permitting to ramp, or increase, the output power $P_{OUT}$ to maximum without exceeding a ramp rate limit. These definitions ensure that the BESS may replace or absorb and smoothen any instantaneous change in source power $P_{PV}$.

In a further preferred variant of the invention, forecast data for the source power $P_{PV}$ is provided based on short-term irradiance prediction or statistically evaluated past irradiance. The lower bound function $SoC_{LO}$ is then defined as a lowest SoC of the BESS permitting to ramp the output power $P_{OUT}$ to a lowest value according to the forecast data without exceeding a ramp rate limit, while the upper bound function $SoC_{UP}$ is defined as the uppermost SoC of the BESS permitting to ramp the output power $P_{OUT}$ to a highest value according to the forecast data without exceeding a ramp rate limit. This extends a safe operating range and consequentially requires less intervention of the BESS controller.

In summary, the proposed State of Charge (SoC) management system relies on a SoC target that is defined by the energy to be absorbed or provided, either in a worst case or most likely (statistical, forecast) scenario. It facilitates smaller dimensioning of the Battery Energy Storage System (BESS), while still guaranteeing the required level of availability. The SoC management likewise reduces the energy throughput, and thus both improves system efficiencies through reduced losses and extends the lifetime of the battery through reduced cycle degradation. Both aspects contribute to lowering costs of the BESS. In other words, BESS-based smoothing of renewable power sources is rendered more economical by utilizing the batteries in an optimal way to provide the adequate smoothing functionality with minimal installed BESS capacity and with maximum battery lifetime. Integration of relevant environmental conditions and / or available short term predictions further improves the resulting economies. The SoC management system is conceptually simple and can easily be implemented even on a cheap controller hardware with limited computational power.

BRIEF DESCRIPTION OF THE DRAWINGS

The subject matter of the invention will be explained in more detail in the following text with reference to preferred exemplary embodiments which are illustrated in the attached drawings, in which:

Fig.1    schematically depicts a PV power system with a PV plant and a BESS;

Fig.2    depicts exemplary SoC target value and bound functions, and

Fig.3    depicts output power and SoC evolution for a second BESS controller w/o forecast.

DETAILED DESCRIPTION OF PREFERRED EMBODIMENTS

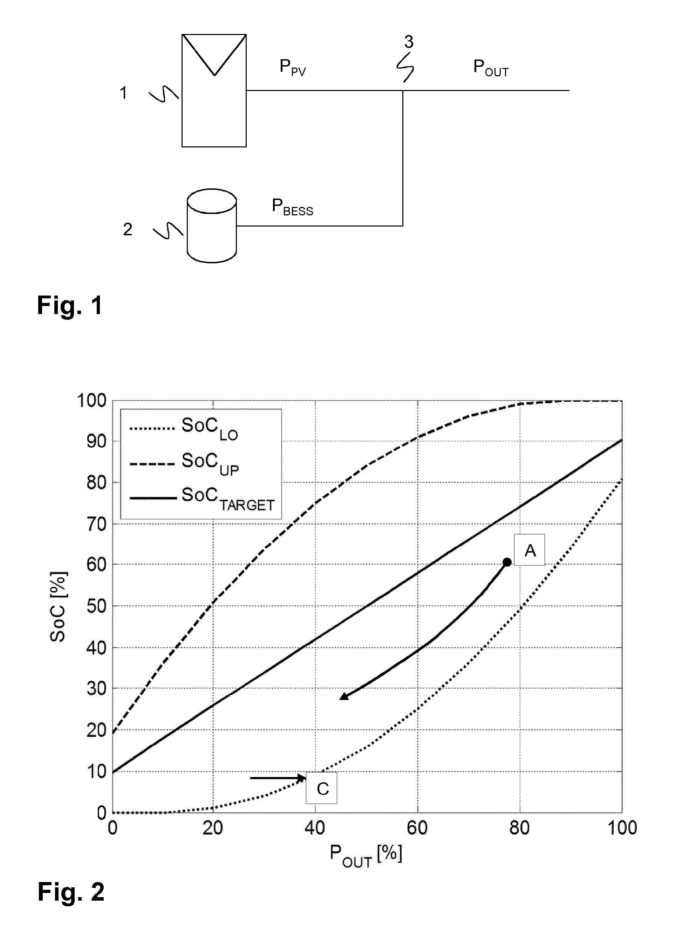

Fig.1 depicts a photovoltaic (PV) power system including a PV plant 1 and a Battery Energy Storage System (BESS) with a battery 2 that output power to an electrical power grid via a Point of Common Coupling (PCC) 3. Power converters and/or transformers may be provided at the PCC and at the BESS, with a BESS converter controlling the power flow between the battery and an AC or DC micro-grid that extends up to the PCC. The output power $P_{PV}$ of the PV plant is given by the present solar irradiance conditions while the power $P_{BESS}$ charged to or discharged from the battery represents a continuous degree of freedom that is exploited by a BESS controller. The power balance is required to hold:

$$P_{OUT} = P_{PV} + P_{BESS}$$

The BESS controller must primarily be designed to perform ramp rate limitation in order to ensure that a rate of change in produced power $P_{OUT}$ does not exceed a specified limit of e.g. 10% of a rated capacity per minute. To that end, in an exemplary PV power system subject to a certain ramp rate limitation and producing, at some point in time, at nominal power, the State of Charge (SoC) of the BESS should be high since only possible downside ramps (rapid decrease in power produced) need to be compensated. If, on the other hand, at some point in time the plant is producing only little power because of cloud coverage, then mainly upside ramps are expected, and consequently the SoC of the BESS should be low in order to be able to compensate rapid increases in power produced. A simple and least aggressive possible BESS controller just charges to, and discharges from, the battery whenever this is required to keep the ramp rates within their specifications.

The BESS controller likewise must be designed to perform long term balancing in order to ensure that in a long enough steady state of PV production, the power delivered to the grid matches the power produced by the PV plant. A simple controller may however drive the battery towards its SoC limits. For instance, the battery may be discharged in the long term in a case where PV production repeatedly decreases in a rapid manner that necessitates BESS intervention, and subsequently increases slowly without making the BESS intervention necessary. Driving the battery to its SoC limits is undesirable as the BESS may occasionally be unable to perform ramp rate limitation.

A first BESS controller according to the invention may be designed based on a single-valued function or mapping of $P_{OUT}$ to a SoC target value $SoC_{TARGET}$. The controller operates, at each discrete time step with given actual value of $P_{PV}$, by choosing a feasible value $P_{BESS}$ which brings the SoC at the next time step as close as possible to $SoC_{TARGET}(P_{OUT})$. Here, a value $P_{BESS}$ is called *feasible* if it keeps the current ramp on $P_{OUT}$ within the specified limits. In case all feasible values $P_{BESS}$ would drive the SoC outside its physical bounds, battery capacity should be increased.

A second BESS controller according to the invention may be designed based on a SoC target range depending on $P_{OUT}$. Instead of a target SoC *value*, an *admissible SoC set or range* may be defined by two SoC target bound functions, one mapping $P_{OUT}$ to a SoC lower bound $SoC_{LO}$ and the other one mapping $P_{OUT}$ to a SoC upper bound $SoC_{UP}$, respectively. The controller operates, at each discrete time step with given actual value of $P_{PV}$, by choosing the smallest feasible value of $P_{BESS}$

in absolute which brings the SoC at the next time step in between $SoC_{LO}(P_{OUT})$ and $SoC_{UP}(P_{OUT})$, or, if impossible, as close as possible to this range. Compared to the first BESS controller, the second BESS controller exhibits a lower degree of aggressiveness which implies less stress on the battery.

SoC target bound functions can be obtained in various ways. A simple way is to make some assumption about possible ramps in $P_{PV}$, specifically the worst case assumption of possible immediate loss of all present PV power or immediate jump to maximum PV power. These assumptions, possibly together with a model for the BESS that includes efficiencies, yields upper and lower bounds on the SoC which should be kept in order to guarantee the battery availability under the assumed ramps.

A SoC target value function $SoC_{TARGET}$ in turn may be obtained e.g. by averaging the upper and lower bound functions.

Fig.2 depicts an exemplary SoC target value function $SoC_{TARGET}(P_{OUT})$ as well as exemplary lower bound function $SoC_{LO}(P_{OUT})$ and upper bound function $SoC_{UP}(P_{OUT})$, with an ideal BESS having no internal resistance or losses (taking into consideration the internal resistance would move both bounds towards higher values). The maximum output power of 100% corresponds to the nominal $P_{PV}$, and may be temporarily exceeded by adding battery power. The lower bound function $SoC_{LO}(P_{OUT})$ is a quadratic function of $P_{OUT}$, due to the fact that constant output power ramps $dP_{OUT}/dt$ maintained exclusively by the battery lead to a ramp time proportional to the initial output power $P_{OUT}$. The area between the lower and upper bound function is a safe operating area comprising the set of admissible SoC values. An exemplary ramping down within the safe operating area is depicted by the arrow starting at eclipse point A where the sun is obscured and the output power $P_{OUT}$ is gradually reduced under depletion of the battery charge until eventually solar irradiation sets in again. In general, system operation within the safe operating area prefers moving towards a constant SoC with zero battery power $P_{BESS}$, in accordance with the aim of minimizing energy throughput.

The definition of the safe operating area and the SoC bound functions, as well as other aspects of the BESS controller, may further depend on external parameters, like time of the day, maximum possible irradiation, season, weather data and forecasts. Another important design criterion for the lower bound function $SoC_{LO}(P_{OUT})$ and the upper bound function $SoC_{UP}(P_{OUT})$ is taking into account battery degradation, as the latter may be significantly reduced if the SoC is predominantly kept in a range favorable for the corresponding battery chemistry. For Li-Ion batteries, the most impact in this respect can be achieved by lowering $SoC_{UP}$ in an optimal way. The BESS controllers described above can be implemented as lookup tables, with the decision variable $P_{BESS}$ being computed depending on a subset of $P_{OUT}$ and the present SoC.

SoC management may be further improved in view of a reduced energy throughput by enlarging, or broadening, the safe operating area, and thus restricting further the operating points that require aggressive intervention in the sense of non-zero battery power $P_{BESS}$. Refined SoC limits may be defined by departing from the above worst-case scenarios that imply an instantaneous jump to zero or maximum $P_{PV}$. More realistic forecast scenarios may be based on statistical data of past irradiation conditions. For instance, by using tail estimates for the distribution of ramps in various conditions, controllers can be designed which will have a certain availability while making the margin between $SoC_{LO}$ and $SoC_{UP}$ as large as possible under the most likely forecast scenario, thereby obtaining a less aggressive controller for SoC management.

Likewise, short term predictions for the solar irradiation in the next 5 to 15 minutes and a corresponding forecast for $P_{PV}$ may be available from a meteorological agency or a local cloud tracking system. Such forecasts as well as any other probabilistic or uncertain short term predictions may be integrated into the SoC management by using optimization and/or Dynamic Programming. While the control strategies described so far do include some active SoC management in order to maintain the SoC in the admissible set, a forecast can be used to make the controller less aggressive. Instead of maintaining the SoC always within the admissible set, it is acceptable that the SoC temporarily leaves the admissible set, provided that (a) the ramp rate control service can still be guaranteed with a sufficiently high probability and (b) the SoC will re-enter, latest at the end of the available prediction horizon, the corresponding admissible set. In order to find the least aggressive controller that achieves this behavior, any control design principle that makes use of the forecast can be used. In particular, Model Predictive Control (MPC) and Dynamic Programming (DP) as variants of model-based control are suitable.

Model Predictive Control (MPC), Nonlinear Model Predictive Control (NMPC) or Stochastic Model Predictive Control involves an objective function based on battery energy throughput or a different degradation criterion, possibly combined with other objectives, depending on the particular application.

Dynamic Programming (DP) is a method for optimizing a sequence of decisions affecting a sequence of states of the system. DP proceeds backwards in time, computing the optimal last decision $P_{BESS}$ for each possible system state consisting of $P_{OUT}$ and SoC while memorizing the cost to go, which is optimal cost of the last decision from each possible state. Using the cost to go, the last but one decision is optimized next, and the cost to go is updated. This procedure is repeated until an optimal trajectory of decisions and states has been computed for all states at the current time. The decision corresponding to the actual state is then implemented.

With model based control the objective function, which may be a function of the battery degradation and possibly other factors, may be optimized under additional knowledge of short term development about the available PV power. This will result in a less conservative SoC management than using only the SoC bound functions as described above.

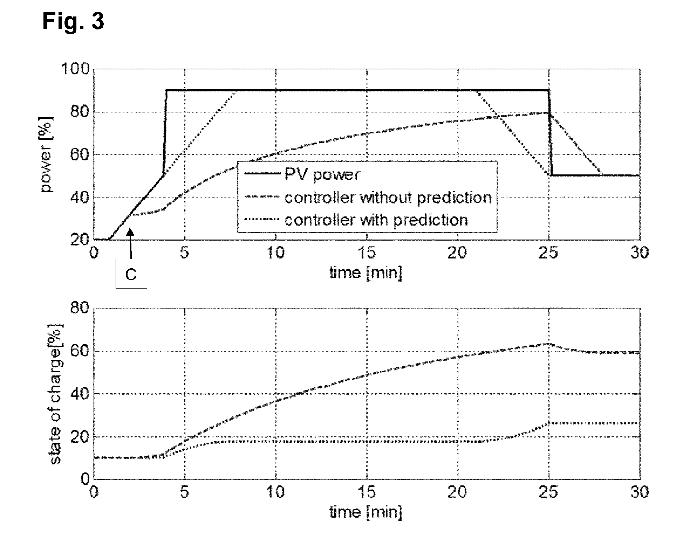

Fig.3 depicts, in the top diagram, PV power $P_{PV}(t)$ (solid line) as well as output power $P_{OUT}(t)$ for a second BESS controller without prediction (broken line) and a second BESS controller with prediction (dotted line), for a lossless 10-minute battery with allowed ramps of 10% per minute. The bottom diagram depicts the corresponding evolution of the SoC. The initial operating point includes a $P_{PV}$ of 20% and a SoC of 10%. Starting at t=1 min, $P_{PV}(t)$ increases at maximum rate, jumps rather instantaneously to a value of 90% at t=4 min, and drops again to a value of 50% at around t=25 min.

The controller without prediction, at about t=2.5 min (designated as point C in Fig.3 and Fig.2), realizes that the operating point is about to leave the safe operating area by trespassing the $SoC_{LO}$ bound, and thus starts to increase the SoC in order to be able to compensate for a possible total loss of PV power. The predictive controller on the other hand, knowing that such total loss of PV power will not happen, only sets in at about t=4 min to smoothen the ramp with minimal energy throughput. In other words, the operating point including a $P_{PV}$ of 50% and SoC of 10% is still within the safe operating area of the predictive controller. The drop in $P_{PV}$ is being proactively smoothed by the predictive controller, leading to a further increase in SoC, whereas the controller without prediction is reactively depleting the battery to compensate the drop.

While the invention has been described in detail in the drawings and foregoing description, such description is to be considered illustrative or exemplary and not restrictive. Variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. The mere fact that certain elements or steps are recited in distinct claims does not indicate that a combination of these elements or steps cannot be used to advantage, specifically, in addition to the actual claim dependency, any further meaningful claim combination shall be considered disclosed.

**Claims**

1. A method of controlling a battery power $P_{BESS}$ of a Battery Energy Storage System BESS for ramp-rate limitation of a source power $P_{PV}$ from a renewable power source, comprising

 - determining a present State of Charge SoC of the BESS and a present output power $P_{OUT}$ of the renewable power source and the BESS,
 - comparing the present SoC with a predefined SoC target depending on $P_{OUT}$, and
 - controlling $P_{BESS}$ based on the comparison.

2. The method of claim 1, comprising

 - defining the SoC target as a SoC target range comprised between a lower bound function $SoC_{LO}$ and an upper bound function $SoC_{UP}$ depending on $P_{OUT}$.

3. The method of claim 2, comprising

 - defining the lower bound function $SoC_{LO}$ as a lowest SoC of the BESS permitting to ramp the output power $P_{OUT}$ to zero without exceeding a ramp rate limit, and
 - defining the upper bound function $SoC_{UP}$ as the uppermost SoC of the BESS permitting to ramp the output power $P_{OUT}$ to maximum without exceeding a ramp rate limit.

4. The method of claim 3, comprising

 - providing forecast data for the source power $P_{PV}$,
 - defining the lower bound function $SoC_{LO}$ as a lowest SoC of the BESS permitting to ramp the output power $P_{OUT}$ to a lowest value according to the forecast data without exceeding a ramp rate limit, and
 - defining the upper bound function $SoC_{UP}$ as the uppermost SoC of the BESS permitting to ramp the output power $P_{OUT}$ to a highest value according to the forecast data without exceeding a ramp rate limit.

5. The method of any of the preceding claims, wherein the renewable power source is either of a photovoltaic power plant, a solar thermal power plant, or a wind power plant.

6. A BESS controller for a Battery Energy Storage System BESS for ramp-rate limitation of a renewable power source supplying a source power $P_{PV}$, adapted to determine a present State of Charge SoC of the BESS and a present output power $P_{OUT}$ of the power source and the BESS, and configured to control a battery power $P_{BESS}$ based on a comparison of the present SoC with a predefined SoC target depending on $P_{OUT}$.

**Fig. 1**

**Fig. 2**

# Fig. 3

Europäisches
Patentamt

European
Patent Office

Office européen
des brevets

# EUROPEAN SEARCH REPORT

Application Number

EP 14 18 8448

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/184136 A1 (TURE EVAN [US]) 3 July 2014 (2014-07-03) * paragraphs [0023] - [0031]; figures 1,3,4 * | 1-6 | INV. H02J3/38 H02J7/34 H02J3/32 |
| X | US 2012/323396 A1 (SHELTON JOHN CHRISTOPHER [US] ET AL) 20 December 2012 (2012-12-20) * paragraphs [0078], [0079]; figures 1b, 5,6 * | 1,4 | |
| X | US 2004/207207 A1 (STAHLKOPF KARL E [US]) 21 October 2004 (2004-10-21) * paragraphs [0022] - [0026]; figures 1,2 * | 1,6 | |

TECHNICAL FIELDS
SEARCHED      (IPC)

H02J

The present search report has been drawn up for all claims

| Place of search | Date of completion of the search | Examiner |
|---|---|---|
| Munich | 12 March 2015 | Colombo, Alessandro |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 14 18 8448

This annex lists the patent family members relating to the patent documents cited in the above-mentioned European search report.
The members are as contained in the European Patent Office EDP file on
The European Patent Office is in no way liable for these particulars which are merely given for the purpose of information.

12-03-2015

| Patent document cited in search report | Publication date | Patent family member(s) | | Publication date |
|---|---|---|---|---|
| US 2014184136 A1 | 03-07-2014 | US | 2014184136 A1 | 03-07-2014 |
| | | WO | 2014106082 A1 | 03-07-2014 |
| US 2012323396 A1 | 20-12-2012 | CN | 103748757 A | 23-04-2014 |
| | | EP | 2721710 A2 | 23-04-2014 |
| | | US | 2012323396 A1 | 20-12-2012 |
| | | WO | 2012177633 A2 | 27-12-2012 |
| US 2004207207 A1 | 21-10-2004 | AU | 2003299977 A1 | 22-07-2004 |
| | | CA | 2511082 A1 | 15-07-2004 |
| | | EP | 1585899 A2 | 19-10-2005 |
| | | JP | 2006511190 A | 30-03-2006 |
| | | KR | 20050120624 A | 22-12-2005 |
| | | US | 2004207207 A1 | 21-10-2004 |
| | | US | 2005062290 A1 | 24-03-2005 |
| | | US | 2006087124 A1 | 27-04-2006 |
| | | US | 2009027002 A1 | 29-01-2009 |
| | | WO | 2004059814 A2 | 15-07-2004 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8471520 B2

- EP 14150332 A